**Europäisches Patentamt**

**European Patent Office**

**Office européen des brevets**

(19)

(11) Publication number: **0 045 083**
**A2**

# EUROPEAN PATENT APPLICATION

(12)

(21) Application number: 81105916.1

(22) Date of filing: 27.07.81

(51) Int. Cl.³: **G 11 B 23/04**

(30) Priority: 28.07.80 JP 105609/80

(43) Date of publication of application: 03.02.82
Bulletin 82/5

(84) Designated Contracting States: **DE FR GB IT NL**

(71) Applicant: **Hitachi Maxell Ltd., No 1-1-88, Ushitora Ibaraki-shi, Osaka-fu (JP)**

(72) Inventor: **Gotoh, Shinichi, 5-5-303, Oenishishimbayashi-cho 4-chome, Nishigyo-ku Kyoto-shi Kyotofu (JP)**

(74) Representative: **von Kreisler, Alek et al, Deichmannhaus am Hauptbahnhof, D-5000 Köln 1 (DE)**

(54) Magnetic recording tape cartridge.

(57) A magnetic recording tape cartridge comprising a front wall, a magnetic recording tape running along the outside of the front wall, a flange member projected perpendicular to the face of the front wall from the bottom portion of the front wall with a gap between the lower edge of the recording tape and a tape supporting member upwardly projected from the top face of the flange member to support the lower edge of the recording tape so that the recording tape can be maintained stretched when the recording tape is not used.

## Title of the Invention

MAGNETIC RECORDING TAPE CARTRIDGE

## Field of the Invention

The present invention relates to a magnetic recording tape cartridge, and in particular, it relates to a magnetic recording tape cartridge provided with a locking mechanism for locking rotation of at least one tape reel on which a magnetic recording tape is wound and a rotatable lid member for closing a front face of the cartridge to protect the magnetic recording tape extending along the front face.

## Background of the Invention

Such a magnetic recording tape cartridge is known as a video tape cartridge for use in recording and/or reproducing video signals in a magnetic recording tape, and such video tape cartridges comprise a pair of reels for winding the recording tape, said reels being driven by driving shafts of a recording/reproducing apparatus, a tape reel locking mechanism for preventing rotation of the reels to keep the intermediate portion of the recording tape extending along the front face of the cartridge stretched when the cartridge is not used and a rotatable lid member mounted on the front side of the cartridge to close the front face thereof to protect the intermediate portion of the recording tape existing along the front face. Furthermore, the recording tape cartridges are provided with a mechanism for releasing said reel locking mechanism when it is used and a mechanism either for locking the lid member in the closed position and for releasing the lid member to allow to open the front face of the cartridge when used.

In such a conventional magnetic recording tape cartridge, however, the magnetic recording tape extending along the front wall of the cartridge case outwardly of the front surface thereof when the magnetic recording tape cartridge is not used tends to be downwardly loosened by its weight especially at the central portion and deformed such that the lower half of the magnetic recording tape is stretched to be longer than the upper half (such deformation is hereinafter referred to as "one sided deformation").

Further, when the magnetic recording tape is driven to run at a high speed outwardly of the front surface of the cartridge case in a case such as rewinding of the tape, the tape is vertically shaken at the central portion of the front surface of the cartridge case, leading to damage of the magnetic recording tape caused by contact of either the top or bottom edges with the inner surface of the cartridge case when the same is introduced into the cartridge case.

## Summary of the Invention

Accordingly, an essential object of the present invention is to provide a magnetic recording tape cartridge which enables prevention of the one sided deformation of the recording tape.

Another object of the present invention is to provide a magnetic recording tape cartridge which enables uniform winding of a magnetic recording tape on a tape reel without any damage of the recording tape during fast winding or rewinding of the recording tape.

A still further object of the present invention is to provide a magnetic recording tape cartridge which is suitable for diminishing the size of the cartridge case particularly suitable for a small-sized video tape cartridge.

According to one aspect of the present invention, there is provided a magnetic recording tape cartridge comprising a cartridge case having a tape chamber for accommodation of a pair of tape reels for winding a magnetic recording tape, a pair of recessed portions defined in the front side of the cartridge case for receiving a pair of tape extracting shafts of a tape player, a front wall and a pair of openings defined in the front wall for extracting the recording tape outside the cartridge case with the intermediate portion of the tape stretched along the front wall when the cartridge is not used, at least one flange member projected outwardly from the bottom portion of the front wall perpendicular to and along the front wall and at least one supporting member projected from the top face of the flange member for partially supporting the bottom edge of the recording tape so as to prevent displacement of the intermediate portion of the recording tape downwardly.

Since the lower edge of the magnetic recording tape in a stationary condition is supported in a slightly raised condition by the projection formed in the substantially central portion of the front face of the bottom section, the magnetic recording tape exposed in the exterior of the front face of the cartridge case is effectively prevented from being loosened so that one sided deformation of the tape can be prevented. Furthermore, in case of fast running of the magnetic recording tape such as rewinding motion, the aforementioned projection for preventing loosening of the tape functions also as a rib for controlling vertical shaking of the magnetic recording tape in the front central portion of the cartridge case, thereby preventing damage of the bottom edge of the tape by shaking.

### Brief Explanation of the Drawings

Fig. 1 is a top plan view of a magnetic recording tape cartridge according to the present invention;

Fig. 2 is a bottom plan view of the magnetic recording tape cartridge of Fig. 1;

Fig. 3 is a front elevational view of the magnetic recording tape cartridge with a rotatable lid member being removed;

Fig. 4 is a top plan view of a bottom section of the magnetic recording tape cartridge with one of the reels being mounted;

Fig. 5 is a front elevational view of a bottom section of the magnetic recording tape cartridge;

Fig. 6 is a bottom plan view of the bottom section of Fig. 5;

Fig. 7 is a cross sectional view taken along the line I - I in Fig. 4;

Fig. 8 is an exploded perspective view of a member for preventing rotation of the reels;

Fig. 9 is a partial cross sectional view of the member of Fig. 8;

Fig. 10 is a perspective view of the member for preventing rotation of the reels as disposed in the left-hand direction;

Fig. 11 is a partially fragmentary exploded front elevational view of the reel;

Fig. 12 is a top plan view of a lower flange of the reel;

Fig. 13 is a bottom plan view of the lower flange of Fig. 12;

Fig. 14 is an enlarged cross sectional view of a principal part of the reel showing the condition of engagement of a tape stopper;

Fig. 15 is an enlarged top plan view of the member for preventing rotation of the reel in a condition the reel is prevented from rotation;

Fig. 16 is an enlarged top plan view of the member for preventing rotation of the reel in a condition the reel is allowed to rotate;

Fig. 17 is a partial cross sectional view taken along the line II - II in Fig. 4;

Fig. 18 is an enlarged top plan view of a part of the bottom section showing the condition of disposition of a lock lever;

Fig. 19 is a partial cross sectional view taken along the line IV - IV in Fig. 18;

Fig. 20 is a perspective view of the lock lever;

Fig. 21 is a front elevational view of the rotatable lid member;

Fig. 22 is a top plan view of the rotatable lid member;

Fig. 23 is a partial cross sectional view taken along the line V - V in Fig. 22;

Fig. 24 is a cross sectional view taken along the line VI - VI in Fig. 22;

Fig. 25 is an enlarged cross sectional view of a principal part of the rotatable lid member in which the lid member is closed;

Fig. 26 is an enlarged cross sectional view of a principal part of the rotatable lid member in which the lid member is opened;

Fig. 27 is a side elevational view of the magnetic recording tape cartridge showing opening movement of the rotatable lid member;

Fig. 28 is a partial cross sectional view taken along the line III - III in Fig. 4;

Fig. 29 is a top plan view of the top section;

Fig. 30 is a bottom plan view of the top section;

Fig. 31 is a cross sectional view taken along the line VII - VII in Fig. 30;

Fig. 32 is a top plan view of a spring plate;

Fig. 33 is a side elevational view of the spring plate;

Fig. 34 is a top plan view of a modified spring plate;

Fig. 35 is a side elevational view of the modified spring plate of Fig. 34;

Fig. 36 is a side elevational view of the magnetic recording tape cartridge showing assembling thereof;

Fig. 37 is a top plan view of the magnetic recording tape cartridge showing a way of assembling the rotatable lid member;

Fig. 38 is a partial enlarged cross sectional view of a principal part of the magnetic recording tape cartridge showing engagement of the cartridge case and the rotatable lid member;

Fig. 39 is a partial enlarged side elevational view of a part of the top section in the vicinity of a supporting hole; and

Fig. 40 is a partial cross sectional view taken along the line VIII - VIII in Fig. 39.

## Description of the Preferred Embodiment

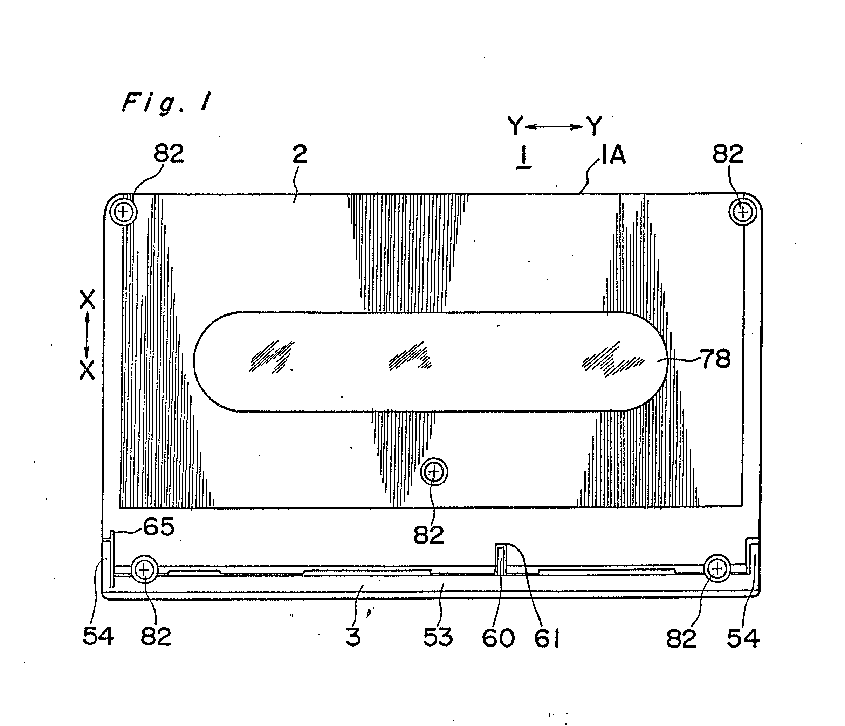

Referring now to Figs. 1 to 3, there is seen a magnetic recording tape cartridge of the present invention comprising a case generally designated 1 composed of a top section 1A, a bottom section 1B, and an elongated lid member 3 rotatably mounted on the front portion of the top section 1A, each portion being made of a plastic material, such as polystyrene resin.

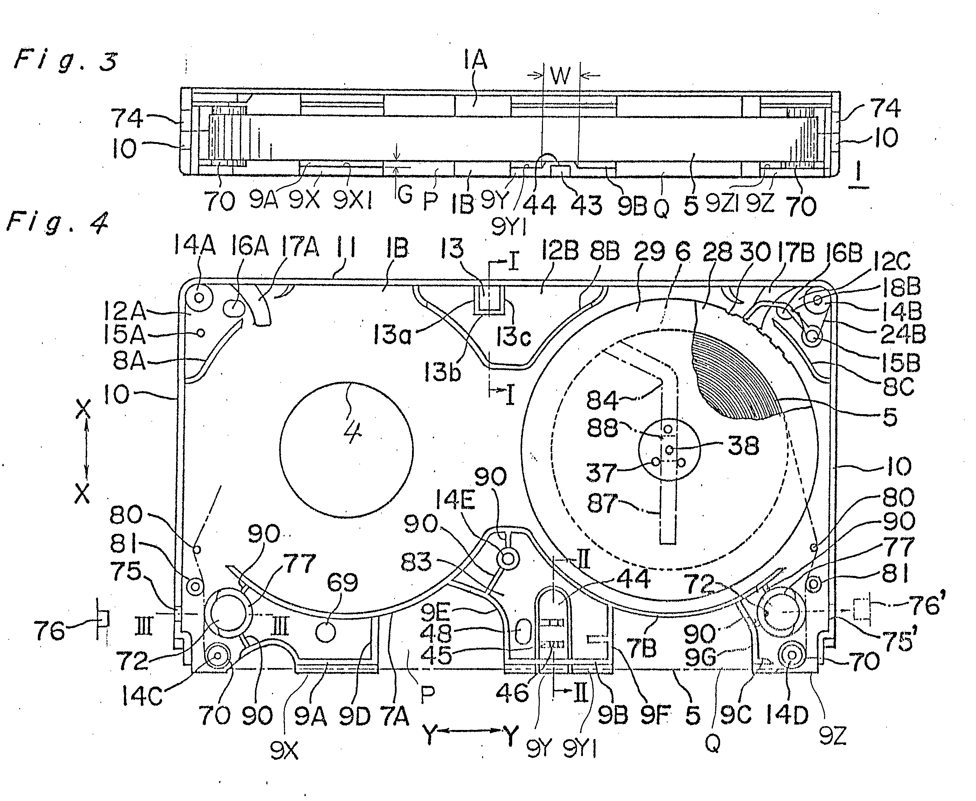

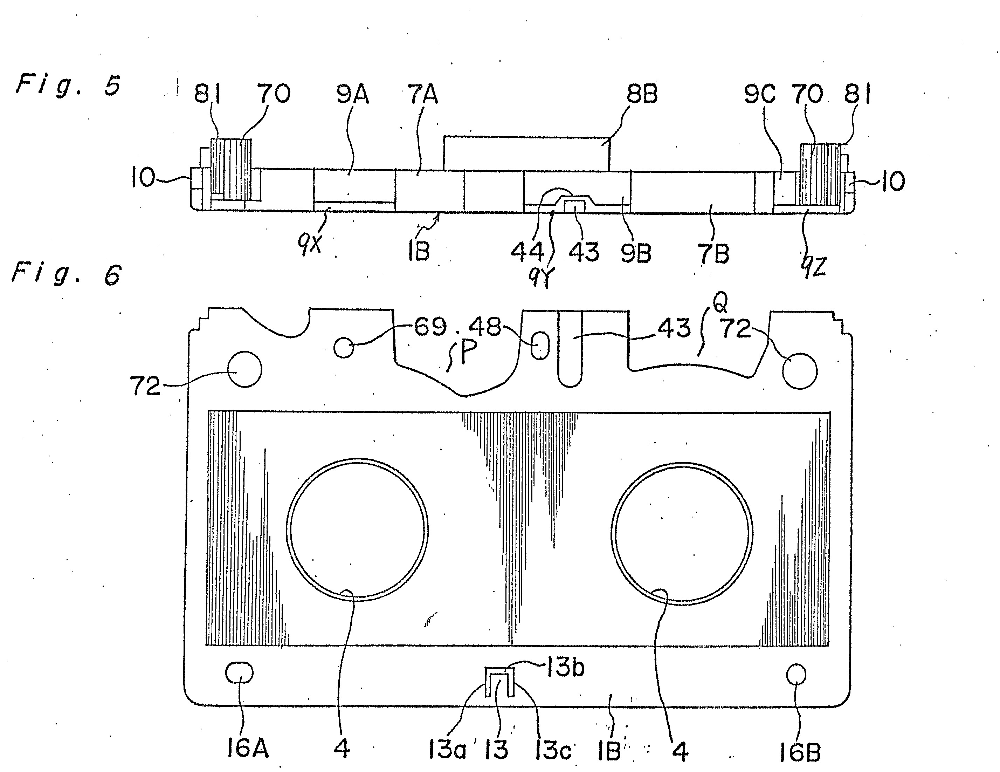

As shown in Figs. 4 and 6, the bottom section 1B is provided at the generally central portion relative to a longitudinal direction X of the case 1 with a pair of through-holes 4 at a predetermined space relative to a lateral direction Y of the case 1 for receiving drive shafts of a recording/reproducing apparatus or a video tape player. A pair of reels 6 for winding a magnetic recording tape 5 are respectively rotatably mounted in the through-holes 4. Said magnetic recording tape 5 is adapted to be retracted from one of the tape reels 6 and taken up another tape reel 6 running along the front face of the cartridge case 1.

The front face of the cartridge case 1 is separated into three front walls 9A, 9B and 9C, and between each two adjacent front walls 9A and 9B and 9B and 9C, there are defined a pair of clearances P and Q which function as openings for receiving pins of a video tape player for drawing out the magnetic recording tape from the cartridge case 1. That is, as seen from Figs. 4 and 6, the bottom plate of the cartridge case is cut out so as to define spaces for insertion of the tape draw out pins when the magnetic recording tape cartridge is mounted in the video tape player.

As shown in Figs. 3 and 5, the front walls 9A, 9B and 9C are provided in lower ends with frontwardly projecting flanges 9X, 9Y and 9Z for preventing damage of the magnetic recording tape caused by displacement of the magnetic recording tape 5 from the front walls and the cartridge case and exposure of the tape from the lower end of the rotatable lid member 3 for covering the front walls.

As shown in Fig. 3, the upper surfaces 9X1, 9Y1 and 9Z1 of the flange 9X, 9Y and 9Z are positioned below the lower edge 5a of the magnetic recording tape in the normal running position leaving a gap G so that running of the magnetic recording tape 5 is not obstructed. For partially supporting the lower edge 5a of the magnetic recording tape 5, a projection 44 is upwardly projected from the central flange 9Y. Said projection 44 has a width W of about 1/3 to 1/4 of the width of the central front wall 9B and a height substantially equal to the gap G. Furthermore, the projection 44 extends frontwardly perpendicularly to the front wall 9B to cross the lower edge of the magnetic recording tape 5.

Said projection 44 serves to support the magnetic recording tape 5 by the lower edge thereof so that the intermediate portion or central portion of the recording tape 5 can be prevented from being loosened downwardly thereby causing the magnetic recording tape 5 to be stretched straightly preventing one sided deformation thereof when not used.

As clearly shown in Figs. 4 and 5, the bottom section 1B is provided with an elongated slot 43 just below the said projection 44 in the lower face of the bottom section with the slot 43 extending from the front end of the flange 9Y to an intermediate portion of the bottom section 1B in a direction perpendicular to the front wall 9B.

By virtue of this, the projection 44 can be molded thin in thickness so that "sink" during molding of the same in a mold is minimized and winding of the recording tape 5 on the tape reel 6 is precisely restricted.

The slot 43 may also serve as a recess for receiving an erroneous insertion preventing member (not shown) of the video tape player.

A conventional video tape player comprises a holder for receiving the magnetic recording tape cartridge, and the erroneous insertion preventing member is formed in the bottom surface of the holder forwardly of the direction of insertion of the cartridge. When the magnetic recording tape cartridge is mounted in the holder with a correct attitude, the erroneous insertion preventing member raised from the bottom surface of the holder can be fitted into the slot 43 of the cartridge case 1 so that the magnetic recording tape cartridge is completely contained in the holder. Contrarily, when the cartridge case 1 is to be mounted in the holder in an inverted attitude, the forward end of the erroneous insertion preventing member strikes the upper surface of the cartridge in a portion having no slot 43 so that the cartridge case 1 is prohibited to enter the holder, thereby preventing the cartridge from being forced into the video tape player in an inverted attitude.

Thus, attitude of the cartridge to be mounted in the tape player is effectively checked so that the tape player and the cartridge case are prevented from being deformed or damaged.

Around the reels 6, there are provided front inner walls 7A and 7B and rear inner walls 8A, 8B and 8C respectively defining some clearances between the same and the outer peripheries of the reels 6, and the inner walls 7 and 8 are integrally formed with the bottom section 1B.

Although the various constructions described hereinafter are not directly related to the present invention, explanation is made merely to make clear the detail of the magnetic recording tape cartridge in which the present invention is employed.

Each of the front inner walls 7A and 7B is formed by an arcuate wall conforming the part of circular edge of the reel 6 and the front inner walls 7A and 7B are connected with each other by an intermediate wall 7C. The intermediate portion of the left side front inner wall 7A is connected with the right end portion of the front outer wall 9A by means of a connecting wall 9D extending in the longitudinal direction X straightly.

Said left side front inner wall 7A is also connected with the left end portion of the intermediate front wall 9B by an arcuate connecting wall 9E, and the intermediate portion of the right hand side front inner wall 7B is connected with the right end of the intermediate front wall 9B by a connecting wall 9F so as to define a chamber for accommodation of a lid locking device, the details of which will be described hereinafter.

The right side front inner wall 7B is also connected with the front wall 9C through a connecting wall 9G which extends from the right end portion of the front inner wall 7B to the left end of the front wall 9C.

The right side rear inner wall 8C extends from a right side wall 10 to a rear wall 11 to define a chamber 12C having generally triangular shape in plan view for mounting a tape reel locking device in the rear corner of the bottom section 1B.

A similar chamber 12A is also defined in the left side rear corner of the bottom section 1B by the left side rear inner wall 8A.

The rear inner wall 8B having generally V-shaped configuration in plan view has its both ends connected with the rear wall 11 in the intermediate portion thereof to form a central chamber 12B of generally triangular shape in plan view. The central rear inner wall 8B is made higher than the rear wall 11 so that the upper end thereof comes close to the bottom inner surface of the top section 1A upon assembling of the bottom section 1B and the top section 1A.

The bottom section 1B is integrally provided in its bottom surface with an erase preventing member 13 of the magnetic recording tape in the interior of the central chamber 12B for preventing erroneous erase of records.

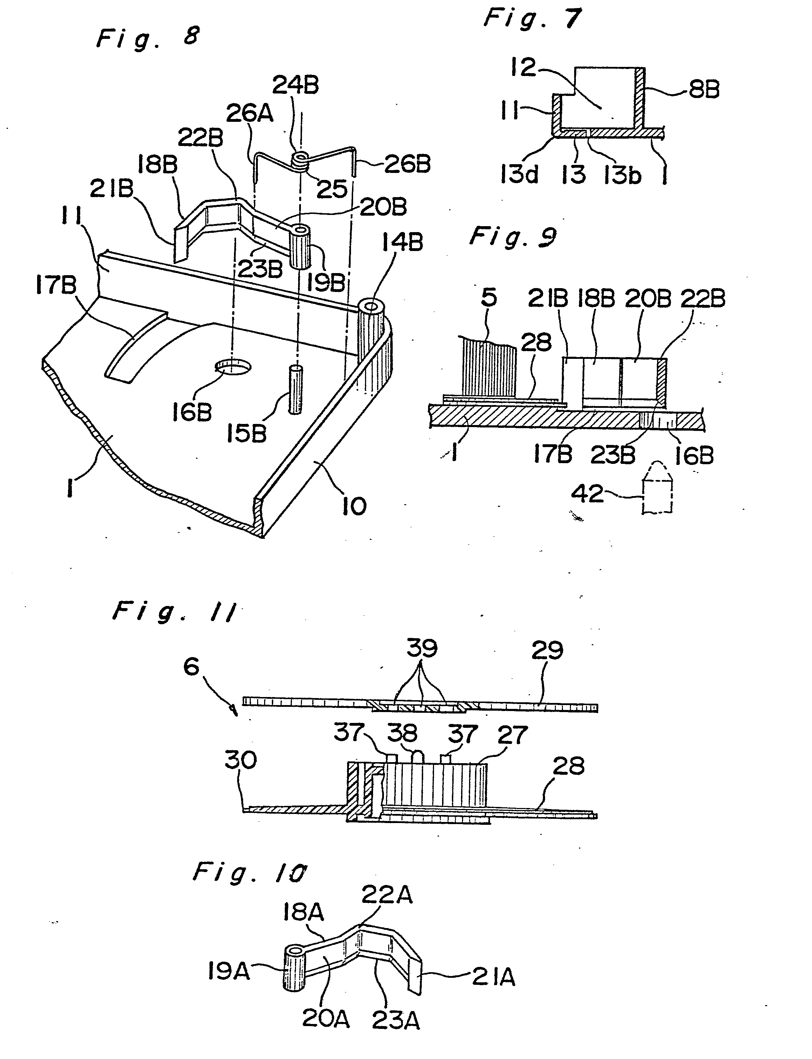

Said erase preventing member 13 is formed in the form of a foldable flap defined by slots 13a through 13c in the bottom face of the bottom section 1B with its one side connected with the foot portion of the rear wall 11 through a thinned portion 13d as shown in Fig. 7 so that the erase preventing member can be easily separated from the bottom section 1B. When the erase preventing member 13 is separated from the bottom plate 1B upon being bent and said member 13 thus separated is received in the chamber 12B, it will neither engage with and damage the magnetic recording tape nor obstruct rotation of the reels 6.

Within a chamber 12A defined by the rear inner wall 8A in the left-hand direction, the side wall 10 and the rear wall 11, there are projected a boss 14A and a pivotal shaft 15A, and there are further defined a slightly elongated through-hole 16A for receiving a standard pin of a recording/reproducing apparatus and an arcuate guide groove 17A arching about the pivotal shaft 15A. Within a chamber 12B defined by the rear inner wall 8C in the right-hand direction, the side wall 10 and the rear wall 11, there are also provided a boss 14B, a pivotal shaft 15B, a circular hole 16B for receiving the standard pin and an arcuate guide groove 17B, all of which are positioned symmetrically with the boss 14A, the pivotal shaft 15A, the elongated hole 16A and the guide groove 17A.

A rotation preventing member 18B for stopping rotation of the reel 6 is rotatably engaged with the pivotal shaft 15B. The rotation preventing member 18B is formed by synthetic resin having low coefficient of friction, and comprises a sleeve 19B engaged with the outer periphery of the pivotal shaft 15B, a receiving member 20B extending from the outer periphery of the sleeve 19B and a pawl 21B formed in the forward end of the receiving member 20B (see Fig. 8). The lower end of the pawl 21B extends slightly downwardly of the lower ends of the sleeve 19B and the receiving member 20B so that the lower end of the pawl 21B enters the guide groove 17B upon engagement of the rotation preventing member 18B and the pivotal shaft 15B. The receiving member 20B is provided with an L-shaped bent portion 22B in a part which comes opposite to the elongated hole 16B when the rotation preventing member 18B is engaged with the pivotal shaft 15B. The receiving member 20B is further provided in the inside of its lower end with an inclined portion 23B inclined with an angle of about 30° to 60°.

A rotation preventing member 18A to be engaged with the left-hand pivotal shaft 15A is, as shown in Fig. 10, symmetrical with the aforementioned rotation preventing member 18B, and also comprises a sleeve 19A, a receiving member 20A and a pawl 21A, in which the receiving member 20A is provided with a bent portion 22A in its center and an inclined portion 23A in its lower end.

A spring member 24B formed by a coiled spring is loosely fitted with the pivotal shaft 15B with interposition of the rotation preventing member 18B therebetween. As shown in Fig. 8, the spring member 24B has in its center an annular portion 25 formed by a plurality of windings, and the free end portions extending from the annular portion 25 are both bent in the longitudinal direction of the annular portion 25 to form elastic free ends 26A and 26B. The annular portion 25 is loosely fitted with the head of the pivotal shaft 15B with the elastic ends 26A and 26B slightly pressed each other against elasticity of the spring member 24B and simultaneously inserted into the clearance between the side wall 10 and the receiving member 20B, and thereafter the elastic ends 26A and 26B are released. Then, by virtue of restoring force of the spring member 24B, the elastic ends 26A and 26B are elastically made in contact with the outer surface of the receiving member 20B and the inner surface of the side wall 10 respecitvely, and the pawl 21B of the rotation preventing member 18B is elastically pressed against the reel 6 by the spring member 24B. Such construction simplifies provision and supporting of the spring member 24B.

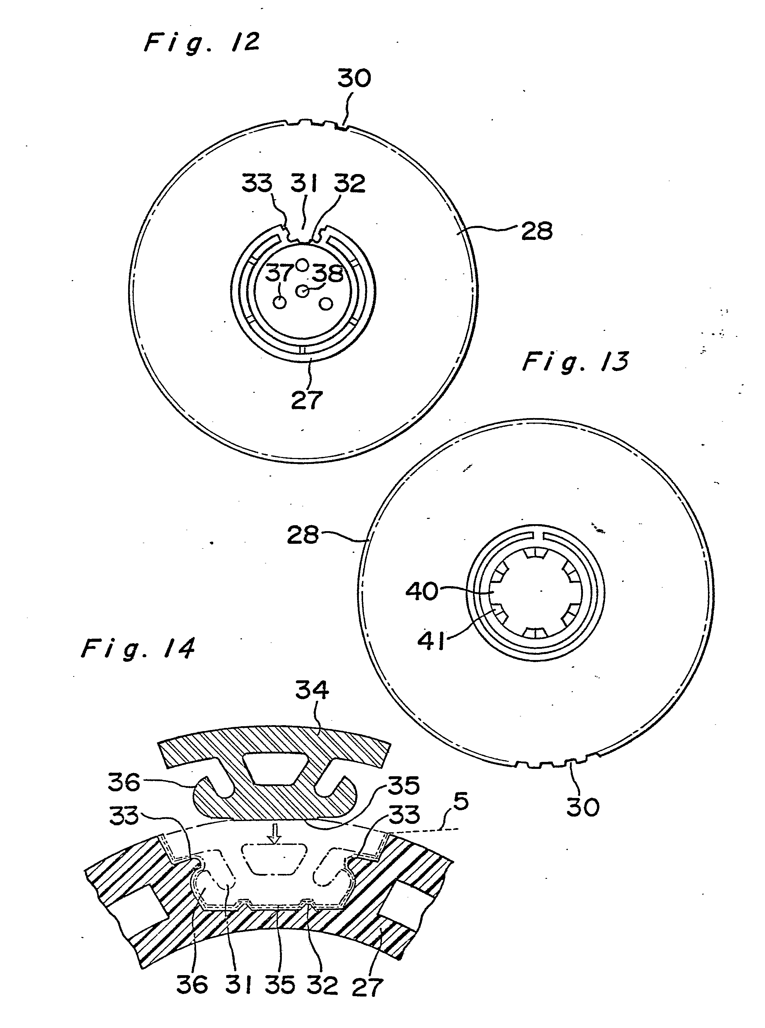

As shown in Fig. 11, each of the reels 6 comprises a lower flange 28 having a hub 27 integrally projecting therefrom and an upper flange 29. The lower flange 28 is made of opaque synthetic resin, and has a plurality of teeth 30 formed at regular intervals along the entire outer periphery thereof.

As shown in Figs. 12 and 14, the hub 27 is provided in its outer periphery with a concave portion 31 opening toward the outer peripheral surface of the hub 27 for engagement with a tape stopper as hereinafter described. The concave portion 31 is provided in its bottom with one or more tape nippers 32 and in both side walls with a pair of projections 33. A tape stopper 34 to be engaged with the concave portion 31 through an end of the magnetic recording tape 5 has a lower end surface 35 which is flat at least in a portion opposite to the tape nipper 32 and a pair of elastic projections 36 having some flexibility on both sides of the lower end surface 35 (see Fig. 14). Therefore, when the tape stopper 34 is pressed into the concave portion 31 through the end of the magnetic recording tape 5, the elastic projections 36 are both inwardly pressed to be deformed and go beyond the projections 33 of the concave portion 31 respectively, thereby making the tape stopper 34 inserted within the concave portion 31. Upon insertion within the concave portion 31, the tape stopper 34 is prevented from being disengaged from the concave portion 31 by function of the projections 33 as stoppers. And the magnetic recording tape 5 is securely held between the tape nipper 32 and the lower end surface 35 of the taper stopper 34 by pressing force of the tape stopper 34 and between the elastic projections 36 and the projections 33 by elastic force of the elastic projections 36 respectively so that the end of the magnetic recording tape 5 comes in contact with the hub 27.

As shown in Figs. 11 and 12, the hub 27 has in its upper portion bonding projections 37 for bonding the upper flange 29 to the hub 27 and a central projection 38 of the reel 6. The upper flange 29, made of transparent synthetic resin, has holes 39 for receiving the bonding projections 37 and the central projection 38 of the hub 27 (see Fig. 11). After the bonding projections 37 and the central projection 38 are inserted into the holes 39, the upper ends of the bonding projections 37 are thermally bonded to the upper flange 29 to secure the upper flange 29 to the hub 27. The central projection 38 passes through the hole 39 to project outwardly from the upper flange 29.

As shown in Fig. 13, the hub 27 has in its lower portion a concavity 40 for receiving a drive shaft of a recording/reproducing apparatus, which has a plurality of projections 41 formed at regular intervals in its periphery for transmitting driving force to the magnetic recording tape. When the reels 6 are placed on predetermined positions of the bottom section 1B, the concavities 40 of the hubs 27 are properly located on the through-holes 4 of the bottom section 1B.

Upon placement of the reels 6 on the predetermined positions of the top section 1A, the rotation preventing

0045083

member 18 and the spring member 24 are respectively engaged with the pivotal shafts 15 and the pawls 21 of the rotation preventing member 18 are engaged in the teeth 30 of the reels 6 to prevent rotation of the reels 6. In this condition, the bent portions 22 of the receiving members 20 of the rotation preventing members 18 are located above the circular holes 16 as shown in Figs. 4, 9 and 15.

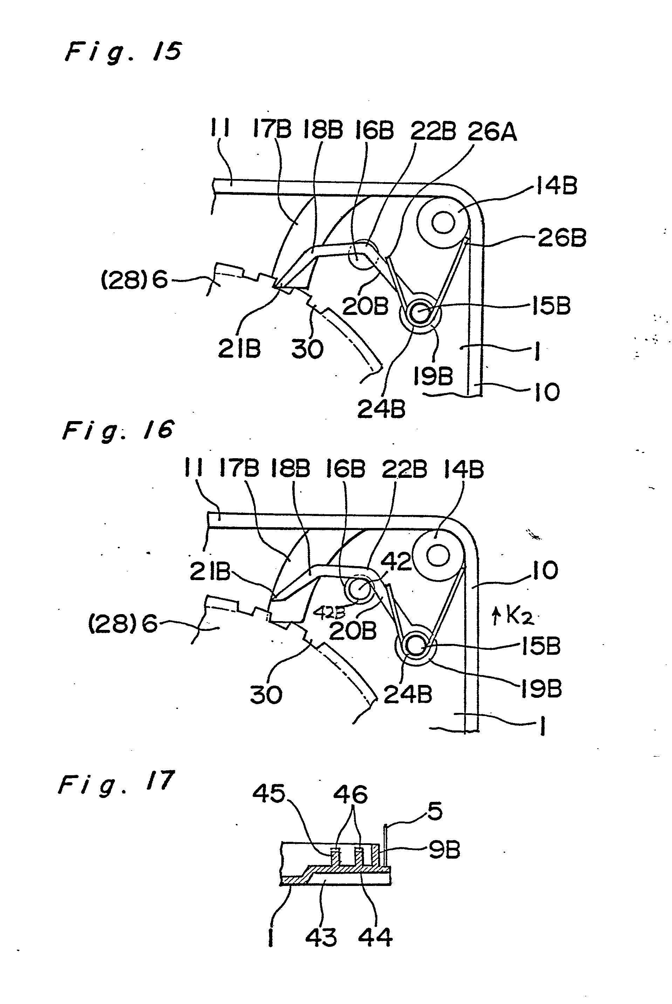

When the magnetic recording tape cartridge is mounted on a recording/reproducing apparatus and is lowered therein, top ends of standard pins 42 (Figs. 9 and 16) pass through the circular holes 16 to be in contact with the lower ends of the receiving members 20 of the rotation preventing members 18. Since the receiving members 20 are provided in lower ends with the inclined portion 23, the receiving members 20 are pushed back by the standard pins 42 against the elastic restoring force of the spring members 24 so that the rotation preventing members 18 rotate about the pivotal shaft 15 toward the rear wall 11 of the bottom section 1B. Then the pawls 21 are disengaged from the teeth 30 of the reels 6 to release the reels 6 from being prevented from rotation (see Fig. 16).

By provision of the bent portions 22 in the receiving members 20 in portions opposite to the circular holes 16, the rotation preventing members 18 can be smoothly and securely engaged with the standard pins 42.

Further, the magnetic recording tape cartridge is properly located in a predetermined position, i.e., a standard

- 18 -

position in the recording/reproducing apparatus by engagement of the standard pins 42 and the circular holes 16A and 16B of the bottom section 1B. In this case, the rotation preventing members 18A and 18B are respecitvely brought in contact with the outer peripheries of the standard pins 42 by elastic force of the spring members 24 displacing the magnetic recording tape cartridge rearwardly as shown in an arrow mark K2 in Fig. 16 to cause the opposite side 42B of the standard pin 42 to contact the inner peripheral edge of the hole 16B thereby securing proper location of the magnetic recording tape cartridge.

When the magnetic recording tape cartridge is removed from the recording/reproducing apparatus, the standard pins 42 are disengaged from the circular holes 16 so that the rotation preventing members 18 are rotated against the reels 6 by restoring force of the spring members 24 and the pawls 21 are again engaged with the teeth in the outer peripheries of the reels 6 to prevent rotation of the reels 6.

The receiving member 20 of the rotation preventing member 18 in this embodiment is provided with the bent portion 22 which is L-shaped in plan view, though, the bent portion 22 may be $\Omega$-shaped in plan view. Further, though the inclined portion is provided substantially along the entire length of the lower end of the receiving member 20 in this embodiment, the inclined portion 23 may be provided only in the lower end of the bent portion 22 and in the vicinity thereof.

The bottom section 1B is further provided rearwardly of the front wall 9B with a pair of supporting projections 45 extending substantially in parallel with the front wall 9B, which are respectively provided in the upper surfaces with groove-shaped bearings 46. A lock lever 47 having a rectangular portion is rotatably suspended between the supporting projections 45 by a pair of pins projecting from the both sides of the lock lever, being rotatably mounted in the grooves of the bearings 46, the details of the lock lever 47 will be hereinafter described. Further, in the vicinity of the raised portion 44, there is formed a slightly elongated hole 48 for receiving a release pin which is provided in the recording/reproducing apparatus.

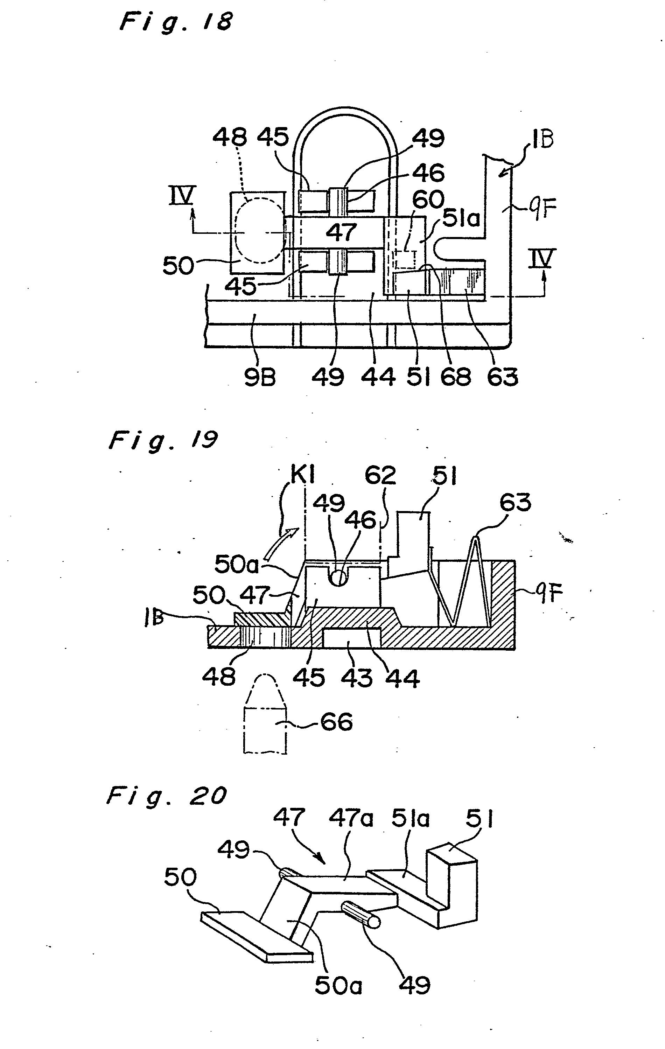

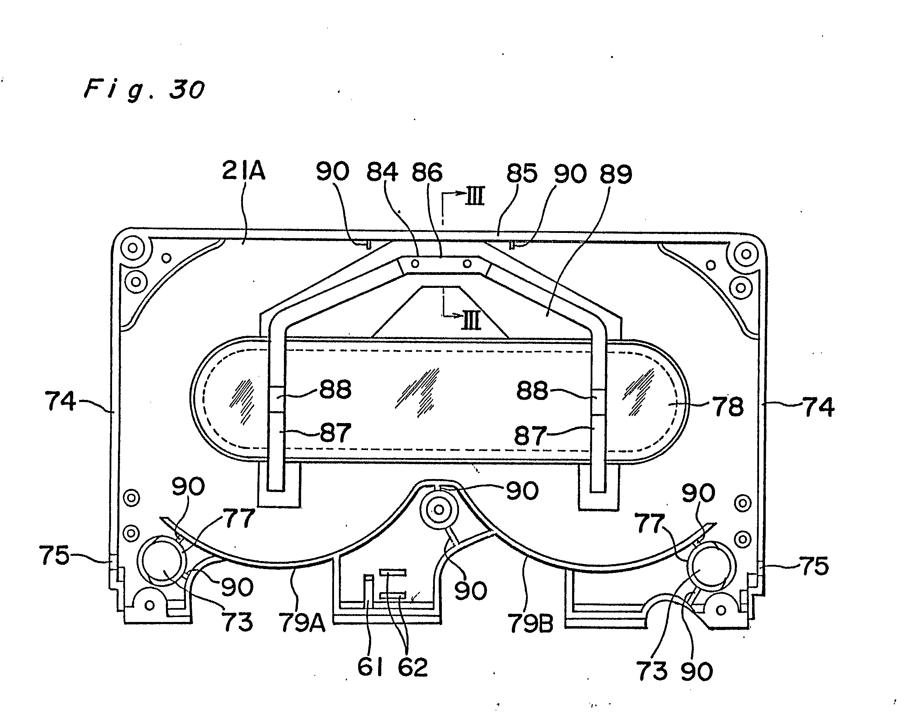

Since the bearings 46 are designed to have a depth of which size is substantially identical with that of the diameter of the rotating pins 49, the rotating pins 49 are fully received in the grooves of the bearings 46 without projecting outwardly from the upper surface of the supporting projections 45. The top section 1A is provided in its inner surface also with a pair of supporting projections 62 (Fig. 30) which are opposite to the supporting projections 45 of the bottom section 1B, though, the supporting projections 62 of the top section 1A have flat lower surfaces. Upon assembling of the top section 1A and the bottom section 1B, the rotating pins 49 are rotatably supported between the supportng projections 45 and 62 without being shaken (see Fig. 19).

As shown in Figs. 18 to 20, the lock lever 47 comprises on its one end a pressing member 50 in the form of a plate which is connected with the intermediate portion 47a of the lever 47 through an inclined connecting plate 50a with the height of the pressing member 50 being lower than the intermediate portion 47a. On the other end of the lock lever 47 there is provided a stop member 51 which is projected upwardly from one end of a connecting plate 51a connected with the other end of the intermediate portion 47a.

The lock lever 47 is so suspended on the bearings 45 that the pressing member 50 is opposed just above the hole 48 defined in the bottom plate of the bottom section 1B and the stop member 51 is located near the corner defined by the front wall 9B and the connecting wall 9F. A plate spring 63 bent in the form of a bellows is inserted between the stop member 51 of the lock lever 47 and the connecting wall 9F, so that the lock lever 47 is elastically biassed by the plate spring 63 to close the elongated hole 48 by the pressing member 50. The stop member 51 of the lock lever 47 is slidably in contact with the plate spring 63 so that the stop member 51 may be inclined toward the plate spring 63 compressing the same. The lock lever 47 functions to prevent opening, i.e., rotation of the lid member 3 which now placed in a closed condition.

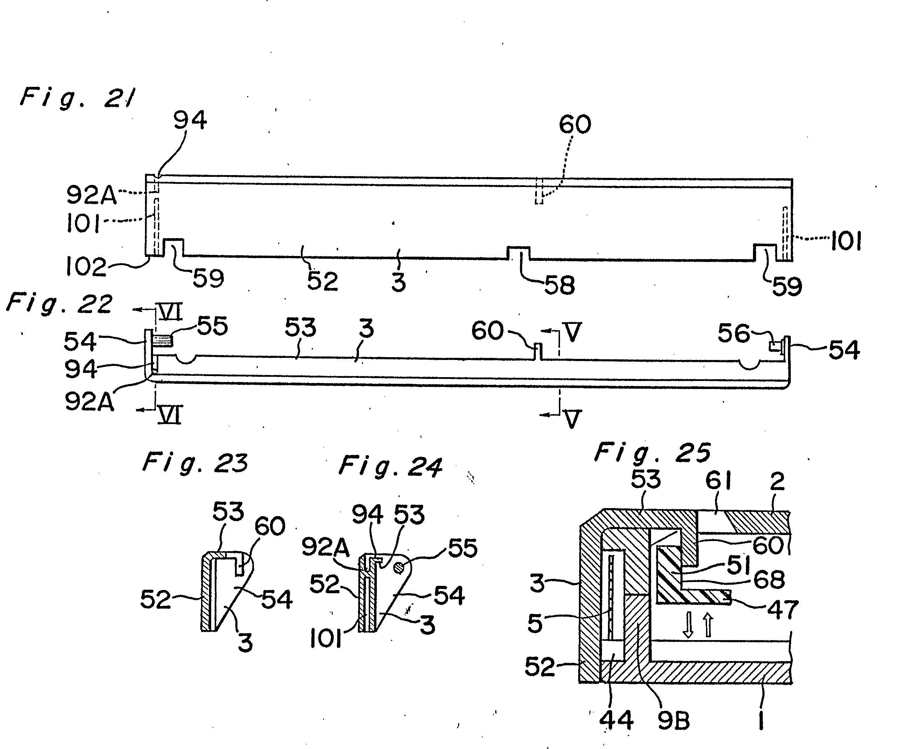

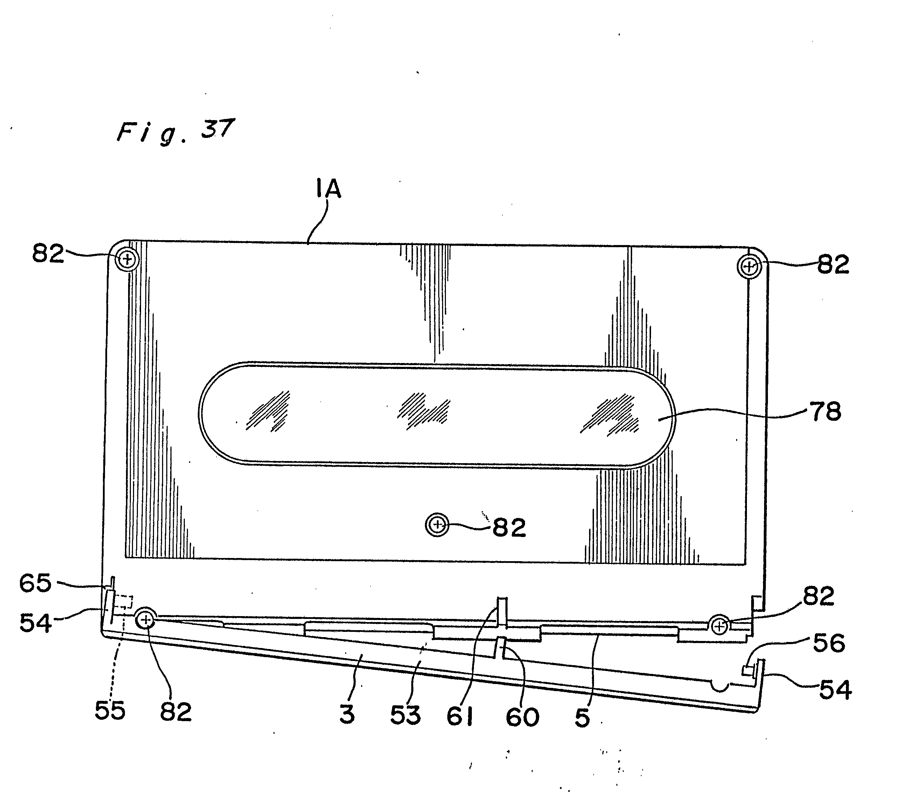

As shown in Figs. 21 to 23, the rotatable lid member 3 comprises an elongated flat front plate 52, an upper plate 53 projected in a vertical direction from the front plate 52 and a pair of end plates 54 projected from the both ends of the front plate 52 in the same direction as the upper plate 53, and the end plate 54 as shown in the left-hand direction and the other end plate 54 as shown in the right-hand direction are respectively provided with inwardly projecting first and second pins 55 and 56. The rotatable lid member 3 is rotatably supported by the top section 1A with the pivotal pins 55 and 56 rotatably engaged in receiving holes 57 (Fig. 36) defined in both side surfaces of the top section 1A. The rotatable lid member 3 is continuously elastically biassed to a closed position by a coiled spring 65 which is loosely fitted with the first pivotal pin 55 with one bent end 64A in contact with the rotatable lid member 3 and the other bent end 64B in contact with the top section 1A.

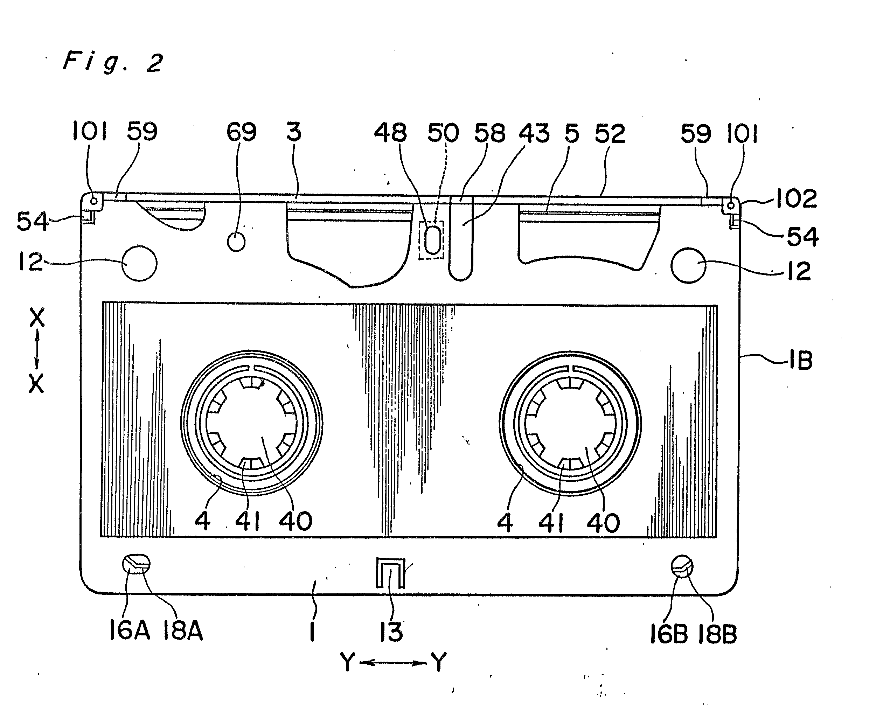

As shown in Figs. 2 and 21, a recess 58 for receiving the erroneous insertion preventing member of a recording/reproducing apparatus (not shown) is provided in the lower end of the front plate 52 of the lid member 3 in a portion opposite to the groove 43 of the bottom section 1B. Further, a pair of recesses 59 for receiving locating members (not shown) provided within a magnetic recording tape cartridge holder of the recording/reproducing apparatus are formed in both ends of the lower portion of the front plate 52. As shown in Figs. 22 and 23, the upper plate 53 is provided in its side with a downwardly extending hook-shaped member 60 in a portion opposite to the lock lever 47. The hook-shaped member 60 passes through a hole 61 defined in the top section 1A to extend toward the stop member 51 of the lock lever 47 (see Figs. 1 and 25).

The operation of the rotatable lid member 3 and the lock lever 47 will hereinafter be described. In Figs. 18, 19, 25 and 27, the rotatable lid member 3 is shown in a closed condition. As hereinabove described, the receiving hole 48 is covered by the pressing member 50 of the lock lever 47 by the pressing force of the plate spring 63. The stop member 51 is, as shown in Fig. 25, positioned ahead of the direction of rotation of the hook-shaped member 60 of the rotatable lid member 3 to prevent rotation of the same. Thus, by engagement of the stop member 51 and the hook-shaped member 60, the rotatable lid member 3 is locked in a closed position not to be opened even by external force.

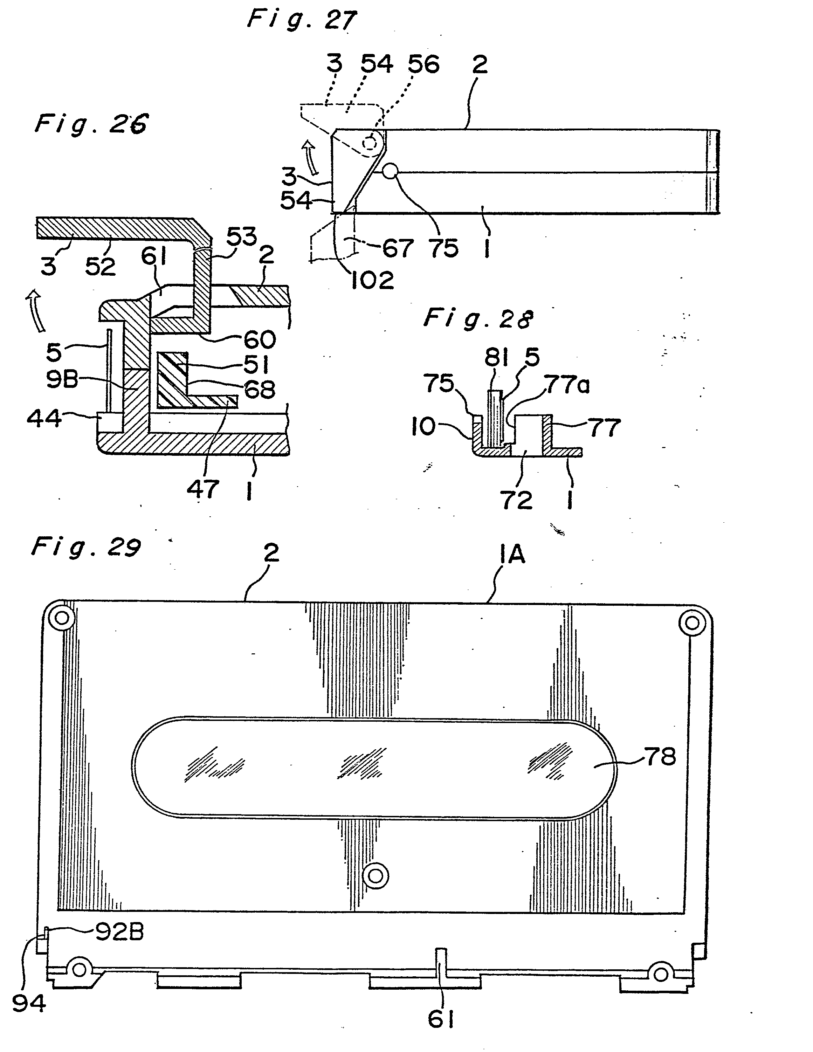

When the magnetic recording tape cartridge is mounted in the recording/reproducing apparatus, the release pin 66 (Fig. 19) is in the first place inserted into the elongated hole 48 to upwardly press the pressing member 50 against the elasticity of the plate spring 63, thereby rotating the lock lever 47 clockwise about the rotating pin 49 as indicated by an arrow mark K1 in Fig. 19. By virtue of this, the plate spring 63 is compressed and the stop member 51 is lowered as shown in Figs. 25 and 26. Thus the stop member 51 is disengaged from the hook-shaped member 60 so that the lid member 3 is made rotatable.

Then, as shown in Fig. 27, the lower end of the rotatable lid member 3 is pushed up by a lid opening member 67 to be opened against the expanding force of the coiled spring 65 which functions to close the rotatable lid member 3. When opened, the rotatable lid member 3 comes in a position indicated by broken lines in Fig. 27.

The rotatable lid member 3 is provided in both ends of its lower surface with flat plates 102 for engaging with the lid opening member 67 so as to facilitate opening of the lid member 3 by the lid opening member 67, and each of the flat plates 102 has in the central portion a small hole 101 extending near the upper plate 53 for preventing warping deformation by contraction during molding of the end plate 54 defining the flat plate 102 (see Fig. 21).

When the magnetic recording tape cartridge is removed from the recording/reproducing apparatus, separating from the lid opening member 67, the rotatable lid member 3 is rotated to its closed position by restoring force of the coiled spring 65. On the other hand, the release pin 66 is disengaged from the elongated hole 48 of the bottom section 1B so that the stop member 51 is upwardly pressed by restoring force of the plate spring 63 forwardly of the direction of rotation of the hook-shaped member 60 to be in contact therewith while the pressing member 50 closes the open end of the elongated hole 48 to complete locking operation. The side 68 of the stop member 51 coming in contact with the hook-shaped member 60 is preferably inclined or rounded for facilitating movement of the stop member 51 forwardly of the direction of rotation of the hook-shaped member 60.

Though the plate spring 63 is provided rearwardly of the stop member 51 in this embodiment, the pressing member 50 may be elastically pressed toward the elongated hole 48 by interposing a spring member such as a coiled spring between the pressing member 50 and the top section 1A.

As shown in Figs. 2 and 4, a circular through-hole 69 is formed in the front portion of the bottom section 1B with a predetermined space from the elongated hole 48. The elongated hole 48 and the through-hole 69 make a pair to receive a location auxiliary pin (not shown) for locating the magnetic recording tape cartridge in a predetermined position within the recording/reproducing apparatus.

As shown in Fig. 4, the bottom section 1B is provided in both end portions of the front surface with a pair of bosses 14C and 14D for engaging respectively with fastening screws and in the substantially central portion of the front surface forwardly of the junction of the front inner walls 7A and 7B with a similar boss 14E.

A hollow pin 70 is rotatably fitted outwardly of each of the bosses 14C and 14D so that the respective hollow pins 70 act to guide the magnetic recording tape 5 when it runs. As each of the bosses 14C and 14D acts as a support member of the hollow pin 70, it is advantageous that the space occupied by the taper guide members can be descreased compared to such a case where the tape guide members are provided separately from the respective bosses for the fastening screws.

Holes 72 are formed rearwardly of the hollow pins 70 to receive cylindrical light sources for detecting forward and rear ends of the magnetic recording tape 5. The top section 1A is, as shown in Fig. 30, provided in positions opposite to the holes 72 of the bottom section 1B with a pair of concavities 73 for receiving the cylindrical light sources. Further, the side walls 10 and 74 of the top section 1A and the bottom section 1B are provided in positions opposite to the through-holes 72 and the concavities 73 with semicircular recesses 75 to define a circular hole 75 for receiving the light source upon assembling of the top section 1A and the bottom section 1B as shown in Fig. 27.

When the magnetic recording tape cartridge is set in the recording/reproducing apparatus, the cylindrical light sources are inserted into the holes 72 and the concavities 73, and a light receiving element 76 having a photo diode opposite to the light source is placed on the side surface of the magnetic recording tape cartridge (see Fig. 4). In operation, the magnetic recording tape 5 runs traversing between the light source and the light receiving element 76, and the forward and rear ends of the magnetic recording tape 5 are respectively connected with light-permeable leader tapes (not shown) made of polyester films.

The forward end of the magnetic recording tape 5 is detected by the cylindrical light source into the through-hole 72 existing in the left-hand portion in Fig. 4 and the light receiving element 76, and the rear end of the same is detected by the light source into the through-hole 72 existing in the right-hand portion in Fig. 4 and the light receiving element 76 respectively. That is, the forward end of the magnetic recording tape 5 is detected by the light receiving element 76 sensing an optical change of rays of light irradiated toward the leader tape and the magnetic recording tape 5 from permeation to interception, and the rear end of the magnetic recording tape 5 is detected by the light receiving element 76 sensing an optical change of said rays of light from interception to permeation.

The shapes of the guide members 70, 80 and 81 can be optionally selected depending on factors such as tension on the magnetic recording tape 5 during operation.

Further, through the front inner walls 7A, 7B, 79A and 79B functioning as shielding members are provided in the top and bottom sections 1A and 1B in the embodiment, the front inner walls may be provided only in one of the sections to extend near the other section.

As shown in Fig. 4, the boss 14E in the bottom section 1B is, different from the other bosses 14A to 14D, provided between the two reels 6, and is relatively near the reels 6. It tends to occur that when a tapping screw 82 (Fig. 4) is threadedly engaged with the boss 14E during assembling of the top and bottom sections 1A and 1B, scraps of synthetic resin brought possibly enter the interior of the cartridge case through a clearance in the juncture of the top and bottom sections 1A and 1B to damage the magnetic recording tape 5. For preventing this, the front inner walls 7A and 7B are elongated and connected at a position between the boss 14E and the peripheral edge of the reels 6 so that the boss 14E is enclosed in a chamber 83 defined by the front inner walls 7A and 7B and the front wall 9B, whereby the boss 14E can be separated from the reels 6.

As shown in Figs. 29 and 30, said window 78 for comprehending the amount of tape 5 wound on the respective reels 6 is formed by a relatively long transparent synthetic resin plate extending over both reels 6. By this arrangement, the condition of the magnetic recording tape 5 in use is precisely comprehended by examining the difference in volume of windings of the tape 5 between the retracting reel 6 and the take up reel 6, for reducing the number of parts of the window 78 and the processes of mounting the same to the top section 1B and for a requirement in design. In this embodiment, therefore, the spring plate 84 is provided between the window 78 and the rear wall 85 of the upper case 2 as shown in Fig. 30.

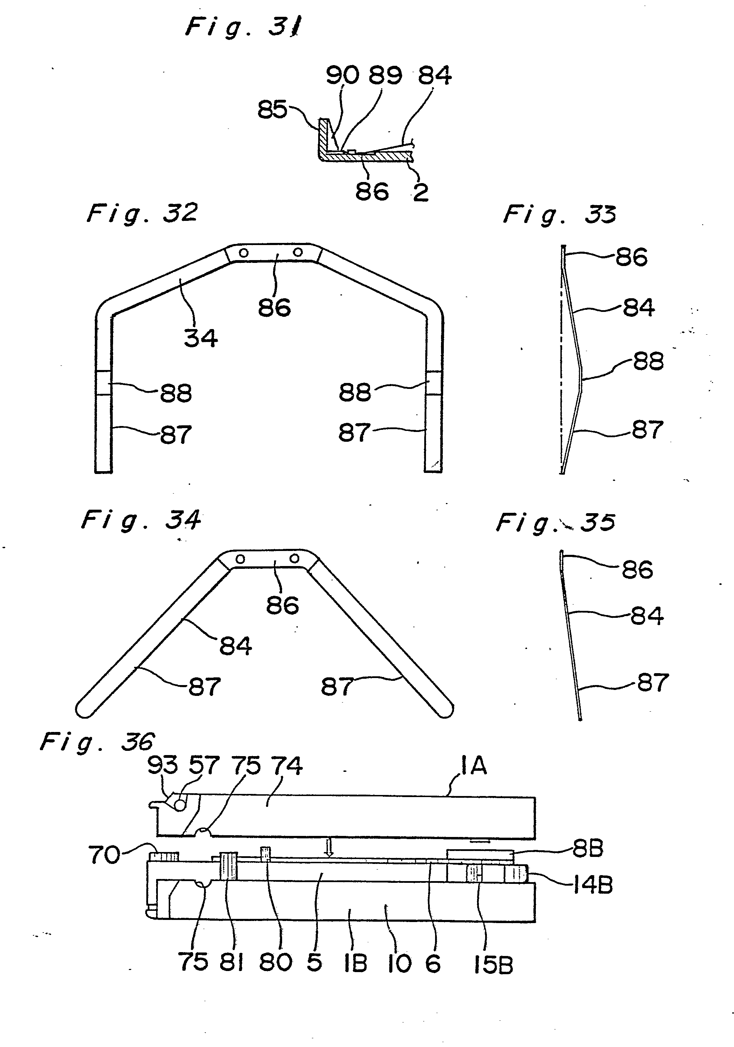

A generally U-shaped spring plate 84 is secured to the bottom face of the top section 1A to press the both of the reels 6 toward the bottom section 1B. Said spring plate 84 is made of, for example, a thin plate of stainless steel, substantially U-shaped in plan view as shown in Figs. 30 and 32, and comprises a central base portion 86 and a pair of pressing members 87 extending toward the reels 6. The pressing members 87 have flat portions 88 coming in contact with pointed ends of the central projections 38 of the reels 6. As shown in Fig. 30, the top section 1A has in its inner surface opposite to the spring plate 84 a shallow recess 89 for widening the allowable range of vertical movement of the spring plate 84.

Figs. 34 and 35 respectively show a modification of the spring plate 84, which is generally V-shaped in plan view.

Since the spring plate 84 is provided between the window 78 and the rear wall 85 of the top section 1A, there is no space to form a central rear wall for controlling location of the reels 6 in the top section as provided in the prior art, such control wall is provided in the bottom section 1B as hereinabove described. By this arrangement, the central portion of the rear wall 85 of the top section 1A may be weak in view of shock-proof property and tends to be deformed when the top section 1A is removed from a mold after the molding of the top section is completed, and thus the rear wall 85 is integrally provided in its interior with reinforcing ribs 90 (see Figs. 30 and 31).

Further, in this embodiment, the top and bottom sections 1A and 1B are also respectively provided with reinforcing ribs 90 for improving shock-proof property of the boss 14E and the shield wall 77 and preventing the same from being deformed when the top section 1A and the bottom section 1B are removed from corresponding molds after forming. Provision of the reinforcing ribs 90 further improve fluidity of synthetic resin within the molds for forming the both sections 1A and 1B.

The order of assembling of the magnetic recording tape cartridge as hereinabove explained will be hereinafter described.

The retracting reel 6 and the take-up reel 6 are placed on the bottom section 1B and the magnetic recording tape 5 is set thereon in a predetermined condition. Then the top section 1A is placed (Fig. 36) to be assembled with the bottom section 1B and fastened together by the tapping screws 82.

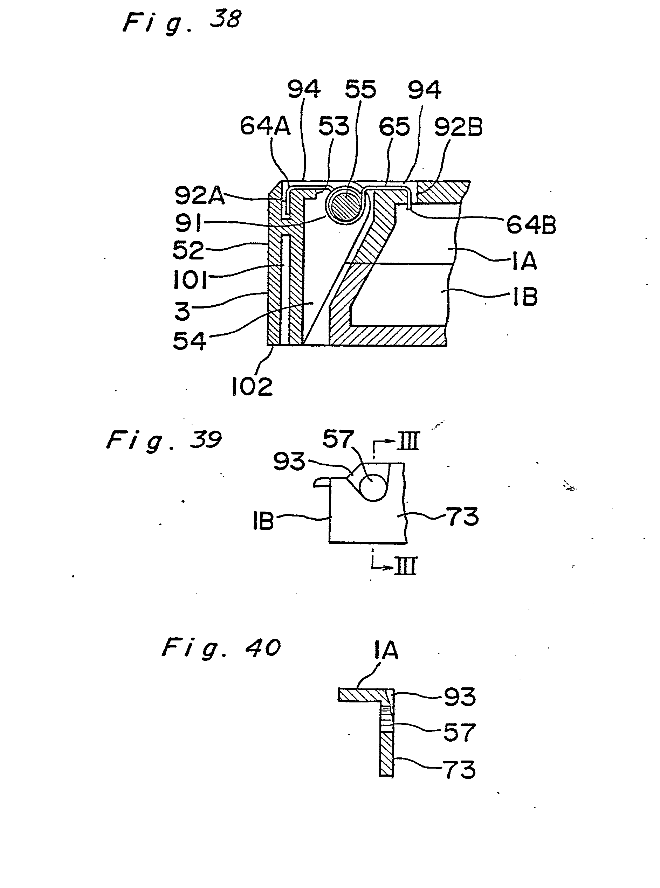

Apart from this, a coil-like portion 91 of the coiled spring 65 for elastically pressing the rotatable lid member 3 is loosely fitted with the first pivotal pin 55 of the rotatable lid member 3. As shown in Fig. 38, the coiled spring 65 comprises a pair of free ends horizontally extending from both sides of the coil-like portion 91 to define downwardly bent end portions 64A and 64B. As hereinabove described, the coil-like portion 91 of the coiled spring 65 is loosely fitted with the first pivotal pin 55 and one bent end portion 64A is inserted into a hole 92A formed in the end of the upper plate 53 of the rotatable lid member 3 whereby the other bent end portion 64B is upwardly manually raised against elasticity of the coiled spring 65.

Under this condition, the first pivotal pin 55 of the rotatable lid member 3 is inserted into the supporting hole 57 formed in the side wall 74 of the top section 1A as shown in Fig. 37 and said other bent end portion 64B of the coiled spring 65 is inserted into a hole 92B formed in the upper surface of the top section 1B (see Figs. 29 and 38).

Then the rotatable lid member 3 is slightly bent and the second pivotal pin 56 is inserted into another supporting hole 57 formed in the side wall 74 of the top section 1A. For facilitating smooth insertion of the second thread pin 56, the rotatable lid member 3 may be made of acryl-nitryl synthetic resin such as copolymer of acryl nitryl styrene and copolymer resin of acryl nitryl-butadiene-- styrene to have flexibility, and as shown in Figs. 36, 39 and 40, a guide groove 93 may be provided from the end of the side wall 73 of the top section 1A toward the supporting hole 57. The guide groove 93 is, as shown in Fig. 40, inclined at the bottom so that the side near the end of the side wall 73 of the top section 1A is made deeper than the side near the supporting hole 57.

The second pivotal pin 56 is engaged in the supporting hole 57 so that the downwardly extending hook-shaped member 60 formed in the rotatable lid member 3 is inserted into the interior of the cartridge case through the hole 61 formed in the top section 1A. Thus, the rotatable lid member 3 can be rotatably mounted on the top section 1A

0045083

and is biassed to the closed position by the restoring force of the coiled spring 65. On the other hand, the free end of the hook-shaped member 60 thus inserted in the interior of the top section 1A is engaged with the rear end of the stop member 51 thereby causing the lid member 3 to be locked in the closed position. Thus, assembling of the magnetic recording tape cartridge is completed.

In the vicinity of the holes 92A and 92B, there are respectively formed receiving grooves 94 for securely retaining the coiled spring 65 extending from the rotatable lid member 3 over the top section 1A in the predetermined position so that it does not project beyond the upper surfaces of the rotatable lid member 3 and the top section 1A. Since no projection member is formed on the outer peripheries of the pivotal pins 55 and 56, the pins 55 and 56 may be inserted into the supporting holes 57 after the top and bottom sections 1A and 1B are assembled each other in the aforementioned manner.

According to the present invention, the following advantages can be obtained:

When the magnetic recording tape cartridge is not in use, the magnetic recording tape is supported by the supporting means with somewhat raised at the generally central portion running along the front surface of the cartridge case, so that the magnetic recording tape is prevented from one sides deformation. When the magnetic recording tape cartridge is set in the recording/reproducing apparatus, the tape reels 6 are somewhat raised upwardly against the elasticity of the spring plate 84 by the drive shaft inserted into the concavity 40 of the reel 6, and the magnetic recording tape 5 is moved upwardly following thereto, so that the bottom edge of the magnetic recording tape 5 is separated from the raised portion 44. Although the magnetic recording tape 5 tends to widely move vertically especially when running fast along the front surface of the cartridge case, provision of the raised portion 44 controls the vertical movement of the magnetic recording tape 5 to facilitate stable running of the tape and prevent the ends of the magnetic recording tape from being damaged by the vertical vibration.

Further, as the magnetic recording tape is wound in such a manner that the upper end and the lower end of the roll of the tape on the tape reel are made flat or the edges of the tape is aligned, recording/reproducing characteristics of the recording tape are not disturbed due to the difference of the height of the recording tape relative to the magnetic head.

When the raised portion for forming the slot 43 for receiving the erroneous insertion preventing member in the lower surface of the bottom section is utilized as a tape loosening preventing member, no special projection member is required to prevent loosening of the magnetic recording tape, thereby saving the space and facilitating diminishment in size of the magnetic recording tape cartridge.

WHAT IS CLAIMED IS:

1. A magnetic recording tape cartridge comprising a cartridge case having a tape chamber for accommodation of a pair of tape reels for winding a magnetic recording tape, a pair of recessed portions defined in the front side of the cartridge case for receiving a pair of tape extracting shafts of a tape player, a front wall and a pair of openings defined in the front wall for extracting the recording tape outside the cartridge case with the intermediate portion of the tape stretched along the front wall when the cartridge is not used, at least one flange member projected outwardly from the bottom portion of the front wall perpendicular to and along the front wall and at least one supporting member projected from the top face of the flange member for partially supporting the bottom edge of the recording tape so as to prevent displacement of the intermediate portion of the recording tape downwardly.

2. A magnetic recording tape cartridge according to Claim 1, wherein said at least one supporting member is formed on the flange member located between the pair of openings for insertion of the tape extracting member of a tape player.

3. A magnetic recording tape cartridge according to Claim 1, wherein said at least one supporting member is formed on the flange member extending generally perpendicular to the front wall.

4. A magnetic recording tape cartridge according to Claim 1, wherein further comprises a recess formed in the bottom face of the flange member corresponding to said at least one supporting member extending along thereof.

5. A magnetic recording tape cartridge according to Claim 4, wherein said recess can serve as a recess for receiving a member provided in a tape player for preventing erroneous insertion of the cartridge case to the tape player.

Fig. 1

Fig. 2

Fig. 3

Fig. 4

0045083

3/4

0045083

Fig. 5

Fig. 6

0045083

**Fig. 8**

**Fig. 7**

**Fig. 9**

**Fig. 11**

**Fig. 10**

0045083

Fig. 12

Fig. 13

Fig. 14

Fig. 15

Fig. 16

Fig. 17

Fig. 18

48 45                49
                     46
                     60   51a
IV                        9F
      47
50
      45
                          IV
9B    49   44 51 68 63

Fig. 19

KI        62   51
   49          63
   46
50a
50  47              9F
IB
48   45 43 44

66

Fig. 20

47  47a 51a  51
49
50
50a   49

Fig. 21

Fig. 22

Fig. 23

Fig. 24

Fig. 25

Fig. 27

Fig. 26

Fig. 28

Fig. 29

Fig. 30

*Fig. 31*

*Fig. 32*

*Fig. 33*

*Fig. 34*

*Fig. 35*

*Fig. 36*

Fig. 37

**Fig. 38**

**Fig. 39**

**Fig. 40**